# EUROPÄISCHE PATENTSCHRIFT

(11) **EP 2 475 982 B1**
(45) Veröffentlichungstag und Bekanntmachung des Hinweises auf die Patenterteilung: **06.11.2013**
(21) Anmeldenummer: 10754305.0
(22) Anmeldetag: 07.09.2010
(51) Int. Cl.: G01N 29/07

(54) **SYSTEM UND EIN VERFAHREN ZUM DETEKTIEREN VON ABLAGERUNGEN IN EINER FLUIDLEITUNG**
SYSTEM AND METHOD FOR DETECTING DEPOSITS IN A FLUID LINE
SYSTÈME ET PROCÉDÉ DE DÉTECTION DE DÉPÔTS DANS UNE CONDUITE DE FLUIDE

(30) Priorität: 10.09.2009 DE 102009040999; 10.09.2009 US 241278 P
(43) Veröffentlichungstag der Anmeldung: 18.07.2012
(73) Patentinhaber: Airbus Operations GmbH, 21129 Hamburg (DE)
(72) Erfinder: FLISTER, Michael, 21629 Neu Wulmstorf (DE); LUTZER, Wilhelm, 23619 Zarpen (DE)
(74) Vertreter: Maiwald, Walter
(86) Internationale Anmeldenummer: PCT/EP2010/063111
(87) Internationale Veröffentlichungsnummer: WO 2011/029818

(56) Entgegenhaltungen:
- DE-A1- 10 214 678
- JP-A- 60 196 662
- US-A- 4 669 310
- US-A1- 2003 140 946
- US-A1- 2003 185 100
- US-B1- 6 474 165

## Beschreibung

### VERWANDTE ANMELDUNGEN

Die vorliegende Anmeldung beansprucht die Priorität der US Provisional Patentanmeldung Nr. 61/241,278, eingereicht am 10. September 2009, und der deutschen Patentanmeldung Nr. 10 2009 040 999.8, eingereicht am 10. September 2009.

### TECHNISCHES GEBIET

Die Erfindung betrifft ein System und ein Verfahren zum Detektieren von Ablagerungen in einer Fluidleitung.

### HINTERGRUND DER ERFINDUNG

Ablagerungen und Verstopfungen in Fluidleitungen werden häufig bemerkt, wenn ein regulärer Volumenstrom des Fluids durch die betreffende Fluidleitung nicht mehr erreicht werden kann. Ist dies der Fall, kann auf Ablagerungen bzw. Verstopfungen geschlossen werden. Zum Entfernen dieser Ablagerungen ist gerade bei längeren Fluidleitungen oder komplexen Fluidleitungssystemen günstig zu wissen, wo genau diese Ablagerungen angeordnet sind, damit an diesem Ort ein mechanischer Eingriff stattfinden kann. Durch sukzessive Demontage von Fluidleitungsteilen kann festgestellt werden, wo Ablagerungen vorliegen. Alternativ ist auch möglich, durch Einschieben von länglichen Rohrreinigungsvorrichtungen in die betroffene Fluidleitung die Ablagerungen aufzuspüren und zu entfernen.

Bei komplexen Fluidleitungssystemen, bei häufigen Richtungs- und Querschnittsänderungen sowie bei besonders festsitzenden ad-hoc eingetretenen Verstopfungen ist dies jedoch nicht ohne weiteres in einem sehr kurzen Zeitrahmen möglich. Beispielsweise in größeren Fahrzeugen mit hohem Passagieraufkommen, etwa in Verkehrsflugzeugen, sind eine Vielzahl von Fluidleitungen installiert, die Verstopfungen unterliegen können. Dies betrifft alle Arten von Fluidleitungen, insbesondere Abwasserleitungen von Toiletten und Waschbecken. Aufgrund der Komplexität und der Länge der in einem Fahrzeug installierten Fluidleitungen und Fluidleitungssystemen sowie der Vielzahl von im Bereich der Fluidleitungen installierten weiteren Bordkomponenten ist es nicht möglich, Ablagerungen und Verstopfungen in derartigen Fluidleitungen durch sukzessive Demontage von Fluidleitungsteilen zu finden, ohne das Fahrzeug für längere Zeit stillzulegen, was jedoch wirtschaftlich nicht sinnvoll wäre. Eine etwa in Wartungshandbüchem von größeren Verkehrsflugzeugen vorgeschriebene präventive Freihaltung bzw. Reinigung von Fluidleitungen mittels nicht unbedenklicher Chemikalien in starren Intervallen verursacht zusätzliche Kosten in der Anschaffung der Chemikalien und könnten auch ein Angreifen der Fluidleitung selbst sowie des Dichtungsmaterials in und an der Fluidleitung hervorrufen.

Ultraschalluntersuchungsmethoden sind z.B. aus US 2003/140946 und US 2003/185100 bekannt.

### ZUSAMMENFASSUNG DER ERFINDUNG

Es könnte demnach als eine Aufgabe der Erfindung angesehen werden, ein System zum Detektieren von Ablagerungen in einer Fluidleitung vorzuschlagen, bei dem eine sukzessive Demontage der Fluidleitung zum Ermitteln des Orts von Ablagerungen nicht erforderlich ist. Eine weitere Aufgabe der Erfindung könnte darin liegen, Intervalle präventiver Freihaltung von Fluidleitungen mittels Chemikalien bedarfsgerecht, d.h. je nach angefallenen Ablagerungen, zu steuern.

Die Aufgabe wird gelöst durch ein System gemäß unabhängigem Anspruch 1. Vorteilhafte Weiterbildungen sind den Unteransprüchen zu entnehmen.

Gemäß einem ersten Aspekt der Erfindung weist das erfindungsgemäße System einen Messkörper mit einem Ultraschallwandler und einem Ultraschallempfänger und mindestens eine mit dem Ultraschallwandler und dem Ultraschallempfänger verbundene Auswerteeinheit auf. Der Ultraschallwandler und der Ultraschallempfänger sind an dem Messkörper angeordnet. Die Auswerteeinheit ist dazu eingerichtet, Daten von Querschnitts- und Richtungsänderungen der Fluidleitung zu speichern. Gleichermaßen ist sie dazu befähigt, Laufzeiten zwischen ausgesandten Ultraschallsignalen und empfangenen Antwortsignalen zu ermitteln und solche Antwortsignale aus den empfangenen Antwortsignalen herauszufiltern, die ausschließlich zu den gespeicherten Querschnitts- und Richtungsänderungen der Fluidleitung gehören. Schließlich ist die Auswerteeinheit dazu eingerichtet, aus den verbleibenden und zu Ablagerungen gehörenden Antwortsignalen die Entfernungen zwischen dem freien Ende des Ultraschallwandlers und den Ablagerungen zu berechnen.

Mit anderen Worten geschildert werden ausgehend von dem Messkörper Ultraschallsignale in die Fluidleitung eingeleitet und resultierende Antwortsignale empfangen. Besonders günstig ist, die Ultraschallsignale direkt leitungsaxial in die Fluidleitung einzubringen, so dass sie sich im Wesentlichen in leitungsaxialer Richtung in der Fluidleitung fortbewegen. Die von dem Ultraschallempfänger erfassten Antwortsignale entstehen an jeder Richtungsänderung wie Krümmungen oder Biegungen der Fluidleitung, an ausreichend wirksamen Querschnittsänderungen der Fluidleitung sowie an Ablagerungen innerhalb der Fluidleitung. Je nach Ausprägung wird ein entsprechend ausgeprägtes reflektiertes Signal, im folgenden auch "Antwortsignal" genannt, in die Fluidleitung zurückgeworfen und schließlich von dem Ultraschallempfänger empfangen. Bei einer Mehrzahl von geometrischen Formänderungen und/oder Ablagerungen empfängt der Ultraschallempfänger eine im folgenden "Antwortsignalfolge" genannte Menge von Antwortsignalen. Die Laufzeit zwischen der Ultraschallsignalemission und eines Zeitpunkts der Reflexion, d.h. der Entstehung eines entsprechenden Antwortsignals, korrespondiert zum Abstand zwischen dem Ort des Ultraschallwandlers und dem Ort, an dem die betreffende Reflexion auftritt.

Zum Ermitteln von Antwortsignalen, die ausschließlich von Ablagerungen hervorgerufen werden, ist die Auswerteeinheit dazu eingerichtet, sämtliche Daten der betreffenden Fluidleitung über sämtliche geometrischen Formänderungen zu speichern, die im installierten Zustand der Fluidleitung vorliegen. Zu jeder dieser geometrischen Formänderungen der Fluidleitung gehört ein charakteristisches Antwortsignal, das eine charakteristische zeitliche Dauer und einen charakteristischen Amplitudenverlauf aufweist. Die Auswerteeinheit ist dazu eingerichtet, aus diesem Datensatz sämtliche charakteristischen Antwortsignale mittels einer Art Mustererkennung bzw. Differenzbetrachtung aus der Antwortsignalfolge herauszufiltern. Dies bedeutet gleichermaßen, dass in der Antwortsignalfolge lediglich solche Antwortsignale verbleiben, die nicht zu den geometrischen Formänderungen der Fluidleitung, sondern zu Ablagerungen oder Verstopfungen gehören. Aus der Kenntnis der Laufzeiten zwischen Aussenden des Ultraschallsignals und dem Empfangen der verbleibenden Antwortsignale kann der Ort jeder ursächlichen Ablagerung innerhalb der Fluidleitung festgestellt werden. Schließlich kann durch Auswertung des jeweiligen Amplitudenverlaufs der verbleibenden Antwortsignale die Größe und Schichtdicke der zugehörigen Ablagerungen festgestellt werden.

In einer vorteilhaften Weiterbildung des erfindungsgemäßen Systems ist die Auswerteeinheit dazu eingerichtet, auf Basis der gespeicherten Daten eine Selbstkalibrierung durchzuführen. So können durch ungenaues Positionieren des Ultraschallwandlers und des Ultraschallempfängers beim Anbringen des Messkörpers keine genauen Aussagen über den Ort der Ablagerungen getroffen werden, da die ermittelten Orte von der Relativposition des Ultraschallwandlers und des Ultraschallempfängers in der Fluidleitung abhängig sind. Aus einer ermittelten Antwortsignalfolge, die mit den gespeicherten Daten über geometrische Änderungen der Fluidleitung verglichen wird, können die genauen Relativpositionen des Ultraschallwandlers und des Ultraschallempfängers relativ zu der Fluidleitung festgestellt werden. Diese ermittelten Relativpositionen können die Auswerteeinheit bzw. einen hierin ausgeführten Algorithmus zur Erkennung von Ablagerungen kalibrieren, indem die Relativpositionen bei der späteren Detektierung oder bereits bei der empfangenen Antwortsignalfolge von Ablagerungen berücksichtigt werden.

Besonders bevorzugt ist der Messkörper aus einem elastischen Material hergestellt und weist eine längliche Form auf. Dies erlaubt das Einschieben des Messkörpers in ein offenes Ende einer Fluidleitung, beispielsweise durch eine Toilettenschüssel, ein Waschbecken oder dergleichen. Der Messkörper könnte etwa als ein flexibles Schlauchstück realisiert sein.

In einer besonders bevorzugten Weiterbildung des erfindungsgemäßen Systems ist die Auswerteeinheit dazu eingerichtet, die Tangentensteigungen von Antwortsignalen, d.h. der Amplitudenverlaufüber der Zeit bzw. die Hüllkurve des Antwortsignals oder ein anderes signifikantes Merkmal, zu ermitteln und aus den ermittelten Tangentensteigungen die Erstreckung der ermittelten Ablagerungen festzustellen.

In einer besonders vorteilhaften Weiterbildung des erfindungsgemäßen Systems ist die Auswerteeinheit dazu eingerichtet, Anzeigedaten für eine ortsaufgelöste Darstellung von Ablagerungen in der Fluidleitung zu generieren. Dabei können sowohl die Entfernungen von dem Ultraschallwandler bzw. Ultraschallempfänger zu der Ablagerung angegeben werden als auch auf einer maßstäblichen Darstellung der betreffenden Fluidleitung markiert werden. Dadurch kann eine Anzeige angesteuert werden, auf der für einen Bediener anschaulich sichtbar wird, wo eine zu entfernende Ablagerung in der Fluidleitung vorliegt.

Eine weitere vorteilhafte Ausbildung des erfindungsgemäßen Systems ist als eine mobile, tragbare Einheit ausgeführt.

Der Ultraschallwandler und der Ultraschallempfänger sind besonders vorteilhaft als sog. Ultraschalltransceiver ausgeführt, bei denen in einer kompakten Baueinheit sowohl die Funktion des Aussendens von Ultraschallsignalen als auch die Funktion des Empfangens von Antwortsignalen realisiert werden können.

Die Aufgabe wird ferner durch ein Verfahren gemäß dem weiteren unabhängigen Anspruch gelöst. Außerdem wird die Aufgabe durch eine Verwendung eines erfindungsgemäßen Systems in einer Fluidleitung eines Flugzeugs gelöst.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 zeigt eine schematische Ansicht des erfindungsgemäßen Systems.
Fig. 2 zeigt eine diagrammartige Gegenüberüberstellung einer Fluidleitung mit Ablagerungen und resultierenden Antwortsignalen über der Zeit.
Fig. 3 zeigt ein erfindungsgemäßes Verfahren in schematischer Ansicht.
Fig. 4 zeigt ein Flugzeug mit mehreren Fluidleitungen, in dem das erfindungsgemäße System eingesetzt werden kann, um das erfindungsgemäße Verfahren auszuführen.

### DETAILLIERTE DARSTELLUNG EXEMPLARISCHER AUSFÜHRUNGSFORMEN

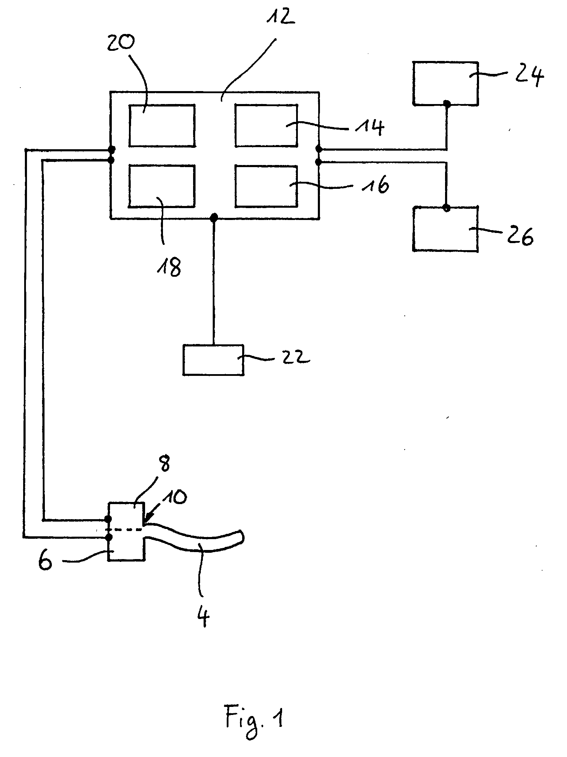

Schematisch zeigt Fig. 1 ein erfindungsgemäßes System 2, das einen Messkörper 4 aufweist, der mit einem Ultraschallwandler 6 und einem Ultraschallempfänger 8 verbunden ist. Die Komponenten Ultraschallwandler 6 und Ultraschallempfänger 8 können auch in Form eines sogenannten "Ultraschalltransceivers" vorliegen, bei dem das Aussenden und Empfangen von Ultraschallsignalen innerhalb einer einzigen Komponente durchgeführt wird.

Ultraschallwandler 6 und Ultraschallempfänger 8 sind an einem Ende 10 des Messkörpers 4 angeordnet, wobei der Messkörper 4 eine längliche und bevorzugt schlauchartige Form aufweist, die ein Durchtreten von Ultraschallwellen erlaubt. Der Messkörper 4 lässt sich durch eine solche Form leicht in eine zu untersuchende Fluidleitung einführen, ohne dass eine partielle Demontage der Fluidleitung notwendig ist. Durch die Verwendung eines elastischen Materials kann der Messkörper 4 auch stärkere Formänderungen der Fluidleitung überwinden, die sich beispielsweise an eine Öffnung des Waschbeckens oder einer Toilettenschüssel anschließen, durch die der Messkörper 4 in die Fluidleitung eingeführt werden kann.

Der Ultraschallwandler 6 und der Ultraschallempfänger 8 sind mit einer Auswerteeinheit 12 verbunden, die den Ultraschallwandler 6 dazu veranlassen kann, Ultraschallwellen in die Fluidleitung auszusenden. Gleichermaßen werden die empfangenen Antwortsignalfolgen vom Ultraschallempfänger 8 an die Auswerteeinheit 12 geleitet und dort weiterverarbeitet.

Die Auswerteeinheit 12 weist eine zentrale Datenverarbeitungseinheit 14 auf, in der die Auswertung der Antwortsignalfolgen in Form von Mustererkennungen, Differenzbetrachtungen oder Korrelation mit Hilfe von geeigneten Algorithmen bewerkstelligt werden kann. Die Auswerteeinheit 12 ist mit einer Speichereinheit 16 verbunden, in der die Daten zu sämtlichen relevanten geometrischen Formänderungen der betreffenden Fluidleitung vorliegen, die insbesondere Richtungsänderungen und Querschnittsänderungen umfassen. Die Auswerteeinheit 12 ist damit befähigt, über die zentrale Datenverarbeitungseinheit 14 aus den empfangenen Antwortsignalfolgen solche Antwortsignale herauszufiltern, die zu den bekannten installationsbedingten geometrischen Formänderungen der Fluidleitung gehören. Zur Auswertung könnte eine Vergleichssignalfolge gebildet werden, die eine Simulation einer empfangenen Antwortsignalfolge einer "sauberen" Fluidleitung ohne jegliche Ablagerungen sein kann. Durch Subtraktion dieser Vergleichssignalfolge von der empfangenen Antwortsignalfolge des Ultraschallempfängers 8 entsteht eine bereinigte Antwortsignalfolge, in der die aus geometrischen Formänderungen resultierenden Antwortsignale nicht mehr vorhanden sind und ausschließlich unerwünschte Ablagerungen repräsentieren.

Aus den ermittelten Antwortsignalen kann durch Zugrundelegen einer Ausbreitungsgeschwindigkeit der Ultraschallwellen in der Fluidleitung eine Entfernung zu jedem Auslöser jedes empfangenen Antwortsignals berechnet werden, was der Entfernung zu der jeweiligen Ablagerung entspricht.

Die Auswerteeinheit 12 ist ferner dazu eingerichtet, die Tangentensteigung bzw. die Hüllkurve oder ein anderes signifikantes Merkmal der Antwortsignale zu ermitteln, wobei zu beachten ist, dass die Erstreckung einer Ablagerung in der Längsrichtung der Fluidleitung umso größer ist, je geringer die Tangentensteigung ist.

Die Auswerteeinheit 12 kann gleichzeitig auch eine Anzeigeeinheit 18 aufweisen, die dazu eingerichtet ist, Anzeigedaten zu den ermittelten Ablagerungen zu erstellen. Aufgrund der Kenntnis der geometrischen Form der betreffenden Fluidleitung sowie der Entfernung zu der betreffenden Ablagerung kann ortsaufgelöst dargestellt werden, wo sich innerhalb der Fluidleitung die Ablagerung befindet. Dies könnte beispielsweise durch eine graphische Darstellung der Fluidleitung erfolgen, in der die ermittelten Ablagerungen als Markierungen sichtbar sind.

Ferner kann die Auswerteeinheit 12 ein Lesegerät 20 aufweisen, in das eine Speicherkarte, eine Diskette oder ein anderes Speichermedium eingesetzt und ausgelesen werden können, etwa um die Speichereinheit 16 mit aktualisierten Daten zu betreffenden Fluidleitungen zu versorgen.

Schließlich kann das erfindungsgemäße System auch eine Datenübertragungseinheit 22 aufweisen, die mit der Auswerteeinheit 12 verbunden ist. Die Auswerteeinheit 12 kann damit dazu eingerichtet sein, mit einem externen Wartungssystem eines Fahrzeugs zu kommunizieren. Dies ist besonders für die Anwendung in Verkehrsflugzeugen relevant, bei denen eine regelmäßige Wartung durchgeführt wird, wofür ein Wartungssystem mit Daten über sämtliche relevanten Fahrzeugdaten vorgesehen sein könnte. Dadurch könnte außerdem die Auswerteeinheit 12 auch ohne externe Speichermedium Daten über die geometrischen Formänderungen der betreffenden Fluidleitung über das erhalten und gleichzeitig die ermittelten Ablagerungen über die Datenübertragungseinheit 22 an das Wartungssystem übermitteln, so dass einem Techniker präsentiert werden könnte, an welchen Stellen vorhandener Fluidleitungen Ablagerungen oder Verstopfungen entfernt werden müssen. Die Datenübertragungseinheit ist bevorzugt als drahtlose Datenübertragungseinheit ausgeführt, um die Mobilität des erfindungsgemäßen Systems gewährleisten zu können.

Das erfindungsgemäße System 2 kann schließlich auch eine Anzeige 24 und Bedienelemente 26 aufweisen, mit denen ein Benutzer auswählen kann, welche der möglichen Fluidleitungen in einem Flugzeug oder dergleichen auf Ablagerungen untersucht wird. Zur Vereinfachung könnte eine betreffende Einrichtung an der Fluidleitung, etwa ein Waschbecken oder eine Toilettenschüssel, an verdeckter Stelle einen Strichcode oder einen RFID-Tag aufweisen, mit dem das erfindungsgemäße System über einen geeigneten und in Fig. 1 nicht dargestellten Scanner bei Bedarf einfach erfassen kann, welche Fluidleitung zur Zeit untersucht wird, so dass die relevanten Daten geladen bzw. aufgerufen werden können. Gleichzeitig ist durch die Anzeige 24 auch eine Rückmeldung des erfindungsgemäßen Systems 2 an den Benutzer möglich, wenn ein Bedienfehler durch einen verstopften oder falsch positionierten Messkörper 4 oder dergleichen vorliegt.

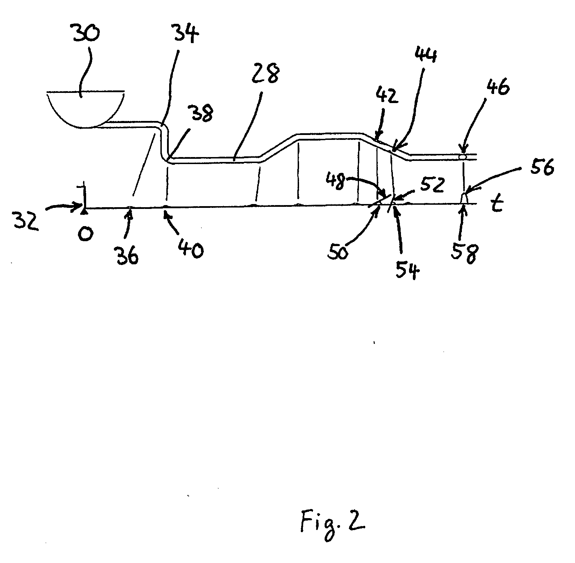

In Fig. 2 wird eine Fluidleitung 28 gezeigt, die mit einem Waschbecken 30 verbunden ist. Diese Art Waschbecken und Fluidleitung 28 könnte in einem modernen Verkehrsflugzeug untergebracht sein, in dem es schwer möglich ist, zur Ermittlung von Ablagerungen und Verstopfungen einer Fluidleitung diese sukzessive zu zerlegen, um dort den Querschnitt zu überprüfen.

Unterhalb der Fluidleitung 28 ist auf gleiche Länge skaliert eine Antwortsignalfolge dargestellt, die über die Zeit aufgetragen ist und aus Reflexionen innerhalb der Fluidleitung 28 auf ein ausgesandtes Ultraschallsignal 32 zur Zeit "0" folgt.

Zum Detektieren von Ablagerungen wird der Messkörper 4 in die Fluidleitung 28 über das Waschbecken 30 eingesetzt. Dort wird das Ausgangssignal beispielhaft leitungsaxial in die Fluidleitung 28 gesendet. Nachdem das Anfangssignal 32 durch die Fluidleitung 28 zu einem ersten Knick 34 gewandert ist, wird es dort reflektiert und verläuft wieder zum Messkörper 4. Hieraus resultiert ein erstes Antwortsignal 36 mit einer charakteristischen Amplitude und einer charakteristischen Tangentensteigung.

Nachdem der nicht reflektierte Teil des Signals weiter zu einem zweiten Knick 38 vorangeschritten und dort zum Messkörper 4 hin reflektiert wird, resultiert ein zweites Antwortsignal 40 mit ebenfalls einer charakteristischen Amplitude und einer charakteristischen Tangentensteigung.

Das Ausbreiten der Schallwellen in im Wesentlichen leitungsaxialer Richtung innerhalb der Fluidleitung 28 führt dazu, dass an sämtlichen Orten mit einer geometrischen Formänderung ein charakteristisches Antwortsignal erzeugt wird, das alleine aus der jeweiligen geometrischen Formänderung resultiert. Da die geometrische Ausgestaltung der installierten Fluidleitung 28 vollständig bekannt ist, können die daraus resultierenden Antwortsignale aus der empfangenen Antwortsignalfolge herausgerechnet werden.

Exemplarisch sind in der gezeigten Fluidleitung 28 zwei Ablagerungen 42 und 44 dargestellt, sowie eine vollständige Verstopfung 46, die einen "schallharten" Abschluss bildet. Die Ablagerung 42 erstreckt sich in Längsrichtung weiter als die Ablagerung 44, so dass die Tangentensteigung 48 des zu der Ablagerung 42 gehörigen dritten Antwortsignals 50 flacher ist als die Tangentensteigung 52 des vierten Antwortsignals 54.

Die Amplitude 56 eines zu der Verstopfung 46 gehörigen fünften Antwortsignals 58 ist deutlich größer als die Amplituden der restlichen Antwortsignale, so dass hier auf eine vollständige Verstopfung geschlossen werden kann.

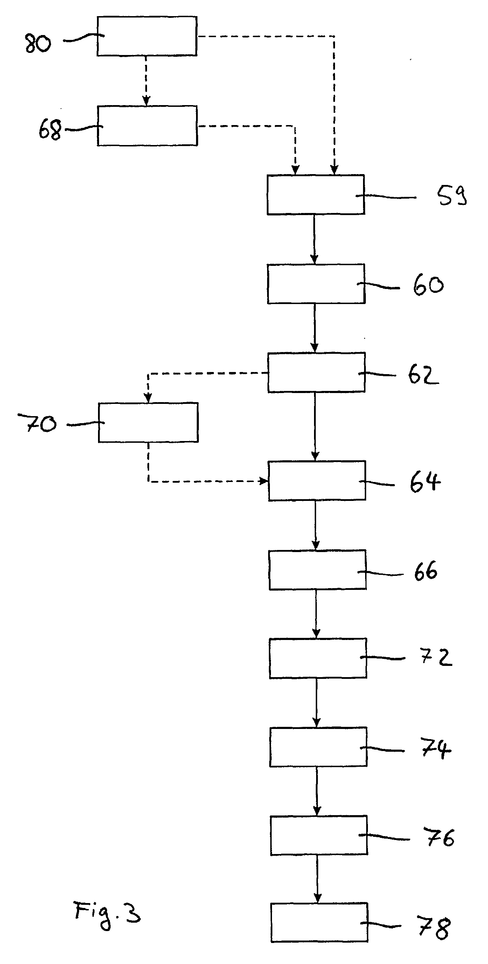

In Fig. 3 wird das erfindungsgemäße Verfahren in einer Blockdarstellung schematisch gezeigt. Nach dem Aussenden 59 eines Ultraschallsignals mittels des Ultraschallwandlers 6 in die Fluidleitung 28 werden von aus Reflexionen innerhalb der Fluidleitung 28 resultierende Antwortsignale mittels des Ultraschallempfängers 8 empfangen 60. Anschließend werden zu gespeicherten geometrischen Formänderungen der Fluidleitung gehörige Antwortsignale aus der empfangenen Antwortsignalfolge herausgefiltert 62. Die Laufzeiten zwischen dem ausgesandten Ultraschallsignal und den empfangenen Antwortsignalen wird bestimmt 64 und hieraus werden die Entfernungen zwischen dem Ultraschallwandler 6 und den Ablagerungen berechnet 66.

Vor Durchlaufen des erfindungsgemäßen Verfahrens könnte eine zu untersuchende Fluidleitung 28 über ein Bedienelement 26 und eine Anzeige 24 ausgewählt werden 68. Das erfindungsgemäße Verfahren sieht außerdem das Durchführen 70 einer Selbstkalibrierung zum Bestimmen der Relativposition des Ultraschallwandlers zu der Fluidleitung. Beispielhaft, ohne den Kern der Erfindung darauf zu beschränken, könnte die Selbstkalibrierung vor dem Herausfiltern 62 von Antwortsignalen von geometrischen Formänderungen der Fluidleitung 28 erfolgen.

Aus den Antwortsignalen von Ablagerungen könnten ferner Tangentensteigungen ermittelt 72 und daraus die Größe, d.h. Dicke und Erstreckung in leitungsaxialer Richtung, der jeweiligen Ablagerungen berechnet 74 werden. Schließlich könnten Anzeigedaten für eine ortsaufgelöste Darstellung ermittelter Ablagerungen in der Fluidleitung generiert 76 werden.

Optional können die Anzeigedaten an ein Wartungssystem übermittelt 78 werden, über welches auch Daten über geometrische Formänderungen der Fluidleitung 28 erhalten 80 werden können.

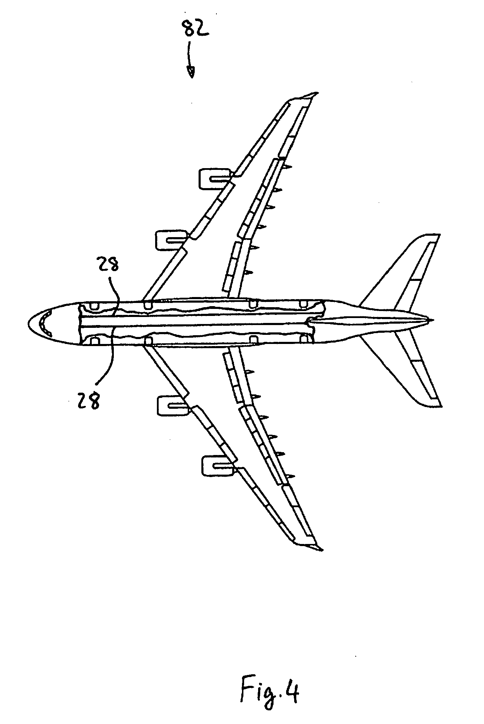

Fig. 4 zeigt ein Flugzeug 82, das mit mehreren Fluidleitungen 28 ausgerüstet ist. Das erfindungsgemäße Verfahren, welches durch das erfindungsgemäße System 2 ausgeführt ist, eignet sich besonders dazu, Ablagerungen und Verstopfungen in einer Fluidleitung 28 in einem Flugzeug festzustellen, da die Notwendigkeit einer sukzessiven Demontage der Fluidleitung 28 entfällt und das Intervall der durch den Einsatz von Chemikalien durchgeführten Freihaltung der Fluidleitung durch das erfindungsgemäße Verfahren bedarfsgerecht gesteuert werden kann.

### BEZUGSZEICHEN

- 2: erfindungsgemäßes System
- 4: Messkörper
- 6: Ultraschallwandler
- 8: Ultraschallempfänger
- 10: Ende des Messkörpers
- 12: Auswerteeinheit
- 14: Datenverarbeitungseinheit
- 16: Speichereinheit
- 18: Anzeigeeinheit
- 20: Lesegerät
- 22: Datenübernagungseinheit
- 24: Anzeige
- 26: Bedienelement
- 28: Fluidleitung
- 30: Waschbecken
- 32: Ultraschallsignal
- 34: erster Knick
- 36: erstes Antwortsignal
- 38: zweiter Knick
- 40: zweites Antwortsignal
- 42: Ablagerung
- 44: Ablagerung
- 46: vollständige Verstopfung
- 48: Tangentensteigung
- 50: drittes Antwortsignal
- 52: Tangentensteigung
- 54: viertes Antwortsignal
- 56: Amplitude
- 58: fünftes Antwortsignal
- 59: Aussenden eines Ultraschallsignals
- 60: Empfangen von Antwortsignalen
- 62: Ausfiltern
- 64: Laufzeiten bestimmen
- 66: Entfernungen berechnen
- 68: Auswählen Fluidleitung
- 70: Durchführen Selbstkalibrierung
- 72: Ermitteln Tangentensteigung
- 74: Berechnen Dicke und Erstreckung
- 76: Generieren von Anzeigedaten
- 78: Übermitteln an Wartungssystem
- 80: Erhalten von Daten
- 82: Flugzeug

## Patentansprüche

1. System (2) zum Detektieren von Ablagerungen in einer Fluidleitung (28), aufweisend
- einen Messkörper (4),
- einen Ultraschallwandler (6) zum Aussenden von Ultraschallsignalen und einen Ultraschallempfänger (8) zum Empfangen von Antwortsignalen und
- mindestens eine mit dem Ultraschallwandler (6) und dem Ultraschallempfänger (8) verbundene Auswerteeinheit (12);
wobei der Ultraschallwandler (6) und der Ultraschallempfänger (8) an dem Messkörper (4) angeordnet sind,
wobei der Messkörper (4) dazu eingereichtet ist, in ein offenes Ende der Fluidleitung (28) zum Einkoppeln der Ultraschallsignale eingeschoben zu werden und Ultraschallsignale in axialer Richtung der Fluidleitung (28) auszusenden,
wobei die Auswerteeinheit (12) dazu eingerichtet ist, Daten von geometrischen Formänderungen der Fluidleitung (28) zu speichern, Laufzeiten zwischen ausgesandten Ultraschallsignalen und aus Reflexionen innerhalb der Fluidleitung (28) resultierenden und von dem Ultraschallempfänger (8) empfangenen Antwortsignalen zu ermitteln, zu den gespeicherten geometrischen Formänderungen gehörige Antwortsignale auszufiltern und aus den verbleibenden und zu Ablagerungen gehörigen Antwortsignalen die Entfernungen zwischen dem Ultraschallwandler (6) und den Ablagerungen zu berechnen.

2. System (2) nach Anspruch 1, wobei die Auswerteeinheit (12) dazu eingerichtet ist, auf Basis der gespeicherten Daten eine Selbstkalibrierung durchzuführen.

3. System (2) nach Anspruch 1 oder 2, wobei der Messkörper (4) eine längliche Form aufweist und aus einem elastischen Material besteht.

4. System (2) nach einem der vorhergehenden Ansprüche, wobei die Auswerteeinheit (12) dazu eingerichtet ist, Tangentensteigungen oder andere signifikante Merkmale von Antwortsignalen von Ablagerungen zu ermitteln und aus den ermittelten Merkmalen die Größe der jeweiligen Ablagerungen zu bestimmen.

5. System (2) nach einem der vorhergehenden Ansprüche, ferner aufweisend eine Datenübertragungseinheit (22), die dazu eingerichtet ist, mit einer externen Komponente Daten über ermittelte Ablagerungen und/oder von Daten über geometrische Formänderungen auszutauschen.

6. System (2) nach Anspruch 5, wobei die externe Komponente ein Wartungssystem ist.

7. System (2) nach einem der vorhergehenden Ansprüche, ferner aufweisend eine Anzeige (24) und mindestens ein Bedienelement (26) zum Steuern der Auswerteeinheit (12).

8. System (2) nach einem der vorhergehenden Ansprüche, wobei die Auswerteeinheit (12) dazu eingerichtet ist, Anzeigedaten für eine ortsaufgelöste Darstellung ermittelter Ablagerungen in der Fluidleitung (28) zu generieren.

9. Verfahren zum Detektieren von Ablagerungen in einer Fluidleitung (28), aufweisend die Schritte:
- Aussenden eines Ultraschallsignals mittels eines Ultraschallwandlers (6) in die Fluidleitung (28);
- Empfangen von aus Reflexionen innerhalb der Fluidleitung (28) resultierenden Antwortsignalen mittels eines Ultraschallempfängers (8);
- Ausfiltern von zu gespeicherten geometrischen Formänderungen der Fluidleitung (28) gehörigen Antwortsignalen;
- Ermitteln von Laufzeiten zwischen dem ausgesandten Ultraschallsignal und den empfangenen Antwortsignalen; und
- Berechnen von Entfernungen zwischen dem Ultraschallwandler (6) und aus den Laufzeiten.

10. Verfahren nach Anspruch 9, ferner aufweisend den Schritt:
- Auswählen einer zu untersuchenden Fluidleitung mittels mindestens eines Bedienelements (26) an der Auswerteeinheit (12).

11. Verfahren nach Anspruch 9 oder 10, ferner aufweisend den Schritt:
- Durchführen einer Selbstkalibrierung zum Bestimmen der Relativposition des Ultraschallwandlers (6) zu der Fluidleitung (28).

12. Verfahren nach einem der Ansprüche 9 bis 11, ferner aufweisend die Schritte:
- Ermitteln von charakteristischen Merkmalen von Antwortsignalen von Ablagerungen; und
- Ermitteln der Größe der jeweiligen Ablagerungen aus den charakteristischen Merkmalen.

13. Verfahren nach einem der Ansprüche 9 bis 12, ferner aufweisend den Schritt:
- Generieren von Anzeigedaten für eine ortsaufgelöste Darstellung ermittelter Ablagerungen in der Fluidleitung (28).

14. Verwendung eines Systems (2) nach einem der Ansprüche 1 bis 8 zum Detektieren von Ablagerungen in einer Fluidleitung (28) eines Flugzeugs (82).

## Claims

1. System (2) for detecting deposits in a fluid line (28), comprising:
- a measuring body (4),
- an ultrasonic transducer (6) for emitting ultrasonic signals and an ultrasonic receiver (8) for receiving response signals and
- at least one evaluation unit (12) connected to the ultrasonic transducer (6) and to the ultrasonic receiver (8);
wherein the ultrasonic transducer (6) and the ultrasonic receiver (8) are disposed on the measuring body (4), wherein the measuring body (4) is arranged to be inserted into an open end of the fluid line (28) for the coupling in of ultrasonic signals, and to emit ultrasonic signals in the axial direction of the fluid line (28),
wherein the evaluation unit (12) is arranged to store data from geometric changes in shape of the fluid line (28), to determine running times between emitted ultrasonic signals and response signals resulting from reflections within the fluid line (28) and received by the ultrasonic receiver (8), to filter out response signals appertaining to the stored geometric changes in shape and to calculate the distances between the ultrasonic transducer (6) and the deposits from the remaining response signals appertaining to deposits.

2. System (2) as claimed in claim 1, wherein the evaluation unit (12) is arranged to carry out a self-calibration on the basis of the stored data.

3. System (2) as claimed in claim 1 or 2, wherein the measuring body (4) comprises an elongate shape and consists of an elastic material.

4. System (2) as claimed in any one of the preceding claims, wherein the evaluation unit (12) is arranged to ascertain tangent gradients or other significant features from response signals from deposits and to determine the size of the respective deposits from the features ascertained.

5. System (2) as claimed in any one of the preceding claims, further comprising a data transmission unit (22) which is arranged to exchange data relating to detected deposits and/or data relating to geometric changes in shape with an external component.

6. System (2) as claimed in claim 5, wherein the external component is a maintenance system.

7. System (2) as claimed in any one of the preceding claims, further comprising a display (24) and at least one operating element (26) to control the evaluation unit (12).

8. System (2) as claimed in any one of the preceding claims, wherein the evaluation unit (12) is arranged to generate display data for a spatially resolved representation of detected deposits in the fluid line (28).

9. Method for detecting deposits in a fluid line (28), comprising the steps of:
- emitting an ultrasonic signal by means of an ultrasonic transducer (6) into the fluid line (28);
- receiving response signals resulting from reflections within the fluid line (28) by means of an ultrasonic receiver (8);
- filtering out response signals appertaining to stored geometric changes in shape of the fluid line (28);
- determining running times between the emitted ultrasonic signal and the received response signals; and
- calculating distances between the ultrasonic transducer (6) and from the running times.

10. Method as claimed in claim 9, further comprising the step of:
- selecting a fluid line to be checked by means of at least one operating element (26) on the evaluation unit (12).

11. Method as claimed in claim 9 or 10, further comprising the step of:
- carrying out a self-calibration in order to determine the relative position of the ultrasonic transducer (6) to the fluid line (28).

12. Method as claimed in any one of claims 9 to 11, further comprising the steps of:
- determining characteristic features from response signals from deposits; and
- determining the size of the respective deposits from the characteristic features.

13. Method as claimed in any one of claims 9 to 12, further comprising the step of:
- generating display data for a spatially resolved representation of detected deposits in the fluid line (28).

14. Use of a system (2) as claimed in any one of claims 1 to 8, to detect deposits in a fluid line (28) of an aircraft (82).

## Revendications

1. Système (2) de détection de dépôts dans une conduite de fluide (28), présentant :
- un élément de mesure (4),
- un transducteur d'ultrasons (6) destiné à émettre des signaux ultrasonores et un récepteur d'ultrasons (8) destiné à recevoir des signaux de réponse et
- au moins une unité d'évaluation (12) reliée au transducteur d'ultrasons (6) et au récepteur d'ultrasons (8) ;
le transducteur d'ultrasons (6) et le récepteur d'ultrasons (8) étant disposés sur l'élément de mesure (4),
l'élément de mesure (4) étant prévu de manière à être poussé dans une extrémité ouverture de la conduite de fluide (28) pour coupler les signaux ultrasonores et émettre des signaux ultrasonores dans la direction axiale de la conduite de fluide (28),
l'unité d'évaluation (12) étant prévue de manière à enregistrer des données de changements de forme géométrique de la conduite de fluide (28), à déterminer des durées entre des signaux ultrasonores émis et des signaux de réponse résultant des réflexions à l'intérieur de la conduite de fluide (28) et reçus par le récepteur d'ultrasons (8), à extraire par filtration des signaux de réponse appartenant aux changements de forme géométrique enregistrés et à calculer à partir des signaux de réponse restants et associés aux dépôts les distances entre le transducteur d'ultrasons (6) et les dépôts.

2. Système (2) selon la revendication 1, dans lequel l'unité d'évaluation (12) est prévue de manière à réaliser un auto-calibrage sur la base des données enregistrées.

3. Système (2) selon la revendication 1 ou 2, dans lequel l'élément de mesure (4) présente une forme oblongue et est composé d'un matériau élastique.

4. Système (2) selon une des revendications précédentes, dans lequel l'unité d'évaluation (12) est prévue de manière à déterminer des pentes de tangentes ou d'autres particularités significatives de signaux de réponse des dépôts et à définir la taille des dépôts respectifs à partir des particularités déterminées.

5. Système (2) selon une des revendications précédentes, présentant en outre une unité de transmission de données (22) qui est prévue de manière à échanger avec un composant externe des données relatives aux dépôts déterminés et/ou des données relatives aux changements de forme géométrique.

6. Système (2) selon la revendication 5, dans lequel le composant externe est un système d'avertissement.

7. Système (2) selon une des revendications précédentes, présentant en outre un affichage (24) et au moins un élément de commande (26) destiné à commander l'unité d'évaluation (12).

8. Système (2) selon une des revendications précédentes, dans lequel l'unité d'évaluation (12) est prévue de manière à générer des données d'affichage pour une représentation localisée des dépôts déterminés dans la conduite de fluide (28).

9. Procédé de détection de dépôts dans une conduite de fluide (28), présentant les étapes consistant à :
- émettre un signal ultrasonore dans la conduite de fluide (28) au moyen d'un transducteur d'ultrasons (6) ;
- recevoir des signaux de réponse résultant de réflexions à l'intérieur de la conduite de fluide (28) au moyen d'un récepteur d'ultrasons (8) ;
- extraire par filtration des signaux de réponse associés à des changements de forme géométrique enregistrés de la conduite de fluide (28) ;
- déterminer des durées entre le signal ultrasonore émis et les signaux de réponse reçus ; et
- calculer des distances entre le transducteur d'ultrasons (6) et à partir des durées.

10. Procédé selon la revendication 9, présentant en outre l'étape consistant à :
- sélectionner une conduite de fluide à analyser au moyen d'au moins un élément de commande (26) sur l'unité d'évaluation (12).

11. Procédé selon la revendication 9 ou 10, présentant en outre l'étape consistant à :
- réaliser un auto-calibrage destiné à définir la position relative du transducteur d'ultrasons (6) par rapport à la conduite de fluide (28).

12. Procédé selon une des revendications 9 à 11, présentant en outre les étapes consistant à :
- déterminer des particularités caractéristiques de signaux de réponse des dépôts ; et
- déterminer la taille des dépôts respectifs à partir des particularités caractéristiques.

13. Procédé selon une des revendications 9 à 12, présentant en outre l'étape consistant à :
- générer des données d'affichage pour une représentation localisée de dépôts déterminés dans la conduite de fluide (28).

14. Utilisation d'un système (2) selon une des revendications 1 à 8 pour détecter des dépôts dans une conduite de fluide (28) d'un avion (82).
